# EUROPEAN PATENT SPECIFICATION

(11) **EP 0 719 291 B1**
(45) Date of publication and mention of the grant of the patent: **20.05.1998**
(21) Application number: 94928591.0
(22) Date of filing: 15.09.1994
(51) Int. Cl.: C08F 226/06, C08F 8/30, C08F 8/32

(54) **NOVEL FUNCTIONALIZED ISOOLEFIN/PARA-ALKYLSTYRENE COPOLYMERS**
NEUE FUNKTIONALISIERTE ISOOLEFIN/PARA-ALKYLSTYROL COPOLYMERE
NOUVEAUX COPOLYMERES D'ISOOLEFINE/PARA-ALKYLSTYRENE FONCTIONNALISES

(30) Priority: 17.09.1993 US 123404
(43) Date of publication of application: 03.07.1996
(73) Proprietor: EXXON RESEARCH AND ENGINEERING COMPANY, Florham Park, New Jersey 07932-0390 (US)
(72) Inventor: PEIFFER, Dennis, G., Annandale, NJ 08801 (US); HSEIH, Dong, T., Arcardia, CA 91007 (US); WANG, Hsien, C., Bellaire, TX 77401 (US)
(74) Representative: Fletcher Watts, Susan J.
(86) International application number: US9410401
(87) International publication number: WO9507945

(56) References cited:
- WO-A-91/04992
- DE-A- 4 039 029
- GB-A- 2 048 898
- US-A- 4 474 923
- US-A- 5 162 445
- DATABASE WPI Section Ch, Week 7836 Derwent Publications Ltd., London, GB; Class A13, AN 77-42484Y XP002004804 & JP-A-52 054 800 (RESEARCH INST PRODN) , 4 May 1977
- POLYMER BULLETIN, Vol. 12, 1984, (PERPEC), "Functional Polymers and Sequential Copolymers by Phase Transfer Catalysis. 12. Functional Polymers Containing 2-(p-phenoxy)-2-oxazoline Pendant Groups", pages 261-268.
- POLYMER PREPRINTS (AMERICAN CHEMICAL SOCIETY DIVISION OF POLYMER CHEMISTRY), Vol. 25, No. 2, 1984, (PERCEC et al.), "Functional polymers containing pendant or terminal 2-(p-phenoxy)-2-oxazoline groups", pages 120-121.

## Description

### FIELD OF THE INVENTION

The present invention relates to novel functionalized isoolefin/para-alkylstyrene copolymers.

### BACKGROUND OF THE INVENTION:

Polymer-polymer adhesion plays a significant role in determining the physical properties such as the stress-strain properties of immiscible blends. Improved adhesion between ductile and brittle components, for example, improves the ultimate properties. The extent of local or even segmental diffusion of chains across the interface between the blend components critically affects the mechanical strength and integrity of the adhesive bonding. Low or nonexistent segmental diffusion is the direct result of polymer-polymer immiscibility leading to a nondiffuse interface and generally poor interfacial strength. Polymer-polymer adhesion increases markedly and blend properties improve when the polymer components are semicompatible. This suggests that the properties of strongly immiscible blends would be enhanced if the interfacial area could be strengthened. This is typically done via addition of interfacially active polymers such as graft or block copolymers. Basically, the compatibilizer has blocks or grafts that are miscible to their respective phases. The polymeric compatabilizer "spans" the interfacial region and thus results in improved adhesion with correspondingly improved mechanical properties. It is, therefore, important to synthesize block or graft copolymers that act as a compatibilizer for strongly phase separated blends, especially rubber-modified blends.

It is an object of the present invention to provide novel functionalized isoolefin para-alkylstyrene copolymers that are particularly suitable for use in forming graft copolymers that can act as compatibilizers for polymer blends.

### SUMMARY OF THE INVENTION

Briefly stated, the present invention comprises a functionalized polymer of an isoolefin having from about 4 to about 7 carbon atoms and a para-alkylstyrene wherein the functionalized polymer comprises a para-alkylstyrene moiety represented by the formula: 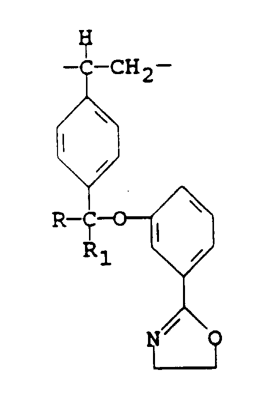 wherein R and R₁ are independently selected from the group consisting of hydrogen, alkyl and primary and secondary alkyl halides.

In a preferred embodiment of the present invention, the novel functionalized polymer has a number average molecular weight of at least about 25,000 and preferably at least about 30,000 to about 10⁶ and a ratio of weight average molecular weight to number average molecular weight of less than about 6 and more preferably less than about 4 to 1.0.

The novel compounds of the present invention are particularly suitable for grafting with polymers containing groups capable of reacting with the oxazoline group on the novel polymer.

In a preferred embodiment of the present invention, the novel polymer has from 0.1 meq oxazoline functionality per 100 g polymer to about 100.0 meq oxazoline functionality per 100 g polymer.

### DETAILED DESCRIPTION OF THE INVENTION

The functionalized polymer of the present invention includes an isoolefin having between 4 and 7 carbon atoms and a para-alkylstyrene in which the functionalized polymer includes para-alkylstyrene moieties represented by the formula: 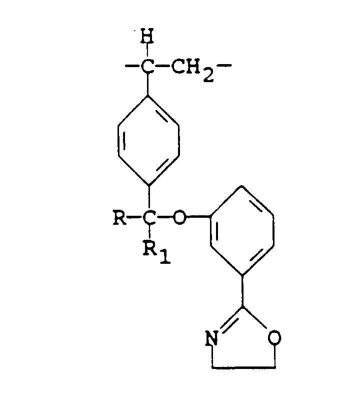 wherein R and R₁ are independently selected from hydrogen, alkyl and primary, and secondary alkyl halides.

A typical functionalized polymer of the present invention can be represented by the formula: 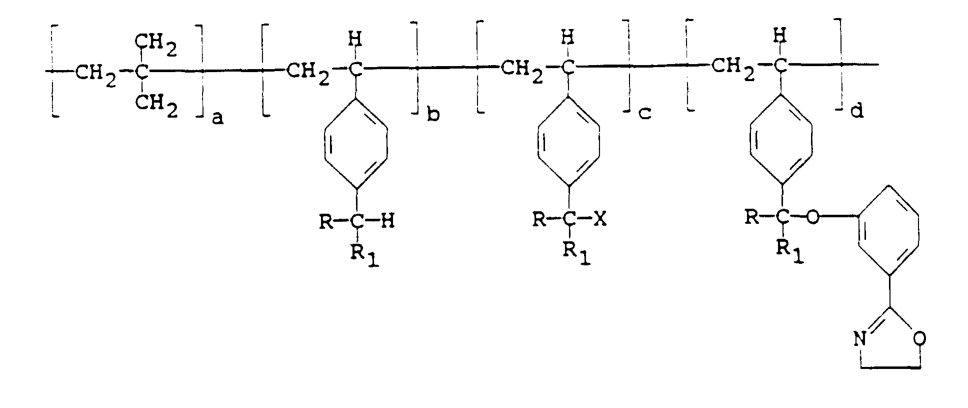 wherein R and R₁ are independently selected from hydrogen, alkyl, primary and secondary alkyl halides and in which the combination of a+b+c+d represents the empirical formula of a substantially random graft copolymer where a ranges from 4 to 70,000; b from 0 to 70,000; c from 0 to 70,000; and d from 1 to 70,000; and in which X represents a halogen.

The novel polymers of the present invention are prepared by contacting a polymer of an isoolefin having 4 to 7 carbon atoms and a para-alkylstyrene, which polymer contains benzylic halide, with 2-(m-hydroxyphenyl)-2-oxazoline in the presence of t-butyl ammonium hydroxide as suitable catalyst for a time and temperature sufficient to form the novel functionalized polymer. Typically, the benzylic halide containing para-alkylstyrene units in the copolymer will have the formula: 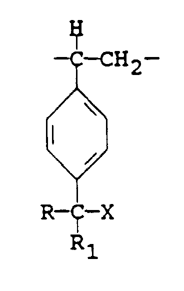 wherein R and R₁ are independently selected from hydrogen, alkyl and primary and secondary alkyl halides and X is a halide, preferably bromide.

Isoolefin para-alkylstyrene copolymers containing benzylic halide that are suitable in the practice of the present invention are United States Patent 5,162,445.

In preparing the compounds of the present invention, the copolymer containing the benzylic halide and the oxazoline compound are contacted in the presence of t-butyl ammonium hydroxide as a catalyst, at temperatures from 20°C to 150°C for a time sufficient to displace the halide from the benzylic group and form the oxazoline functionalized copolymer. Preferably, the contacting is conducted in a solvent such as chlorobenzene, toluene and dichlorethane. Generally, contacting is conducted for from 1 to 24 hours.

An important feature of the functionalized polymers of the present invention is their reactivity. The oxazoline group is readily reactive with many functionalities in other polymers. For example, the oxazoline functionality is readily reactive with polymers containing a pendant carboxylic acid group, such as a carboxylic acid, a carboxylic acid anhydride or a carboxylic acid halide group, thereby forming graft copolymers of improved mechanical properties. Particularly suitable compounds that are reactive with the oxazoline functionalized isoolefin para-styrene copolymer are polystyrene monocarboxylic acid, polystyrene carboxylic acid anhydride and polystyrene carboxylic acid chloride.

### EXAMPLES

### Example 1

A mixture of 6g of 2-(m-hydroxylphenyl)-2-oxazoline and 24g of tetrabutyl ammonium hydroxide (50 wt.% in aqueous solution) was introduced into 200 mls of chlorobenzene which contained 10g of commercially available bromo-p-methylstyrene-isobutylene copolymer having 13.8 meq of the bromo-p-methyl styrene per 100 g of polymer. The mixture was kept at 55°C with continuous stirring for 24 hours. The polymer was precipitated in 1600 ml isopropyl alcohol. The precipitate was dissolved in 300 mls tetrahydrofuran and subsequently filtered through a diatamaceous earth filter aid. The filtrate was added to 800 mls of isopropyl alcohol to precipitate the functionalized polymer (I). The polymer (I) was dried in a vacuum oven at 40°C. The yield was 92% based on recovered polymer. NMR analysis showed that benzylic bromides were absent and oxazoline peaks appeared at δ=3.9 and 4.4 and the peak at 6-5.1 was assigned to the benzylic ether.

### Examples 2 to 4

The grafting of polystyrene onto the oxazoline functionalized polymer (I) of Example 1 was conducted using polystyrene monocarboxylic acid (PSCO₂H), polystyrene carboxylic acid anhydride ((PSCO₂)O) and polystyrene carboxylic acid chloride (PSCOCl). The general scheme using the acid chloride is as follows: 1.6g polystyrene monocarboxylic acid chloride (Mₙ=13,000g/mole) in 10 ml anhydrous 1,2-dichlorobenzene was introduced in 10 ml anhydrous 1,2-dichlorobenzene solution containing 1.0g of the oxazoline functionalized butyl rubber polymer (I) of Example 1 at 100°C. The reaction proceeded for 5 hours. The reaction mixture was cooled and diluted with 20 ml of chloroform. The polymer was precipitated with methanol and unreacted polystyrene was extracted by boiling acetone for one hour. The extracted polymer (II) was dried in a vacuum oven at 50°C for 48 hours. Yield was 2.0g. GPC, NMR and DSC analysis confirmed complete reaction of the oxazoline moieties with polystyrene.

The resulting graft copolymer (II) was molded at 140°C at 20 tons pressure to obtain a pad. Tensile specimens were cut from the pad for mechanical property evaluation. Table 1 shows the properties (tensile measurements) of the grafted copolymer (II) compared to a physical mixture of bromo-p-methylstyrene-butylene copolymer (III) and polystyrene carboxylic acid (PSCO₂H). The grafted copolymer is a thermoplastic elastomer with excellent properties. The unreacted mixture has poor properties due to poor interfacial characteristics.

**Table 1**

| Properties of Grafted Butyl Copolymer and its Physically Blended Counterpart | | | |
|---|---|---|---|
| Sample | Modulus Pa (10⁹) (PSI) | Stress at Break Pa (10⁵) (PSI) | Strain at Break (%) |
| II | 1.055 (153,100) | 171.75 (2,491) | 13 |
| Blend of III and PSCO₂H | 0.0487 (7,069) | 2.55 (37) | 47 |

## Claims

1. A functionalized polymer of an isoolefin having from 4 to 7 carbon atoms and a para-alkylstyrene, in which functionalized polymer at least one para-alkylstyrene moiety has the formula: 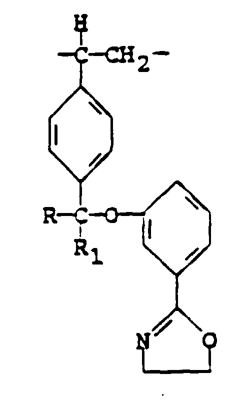 wherein R and R₁ are independently selected from hydrogen, alkyl and primary and secondary alkyl halides.

2. The functionalized polymer of claim 1, wherein R and R₁ are hydrogen.

3. The polymer of claim 1 or claim 2, wherein the polymer has a number average molecular weight of from 25,000 to 10⁶.

4. The polymer of any preceding claim, wherein the isoolefin has 4 carbon atoms.

5. A functionalized polymer represented by the formula: 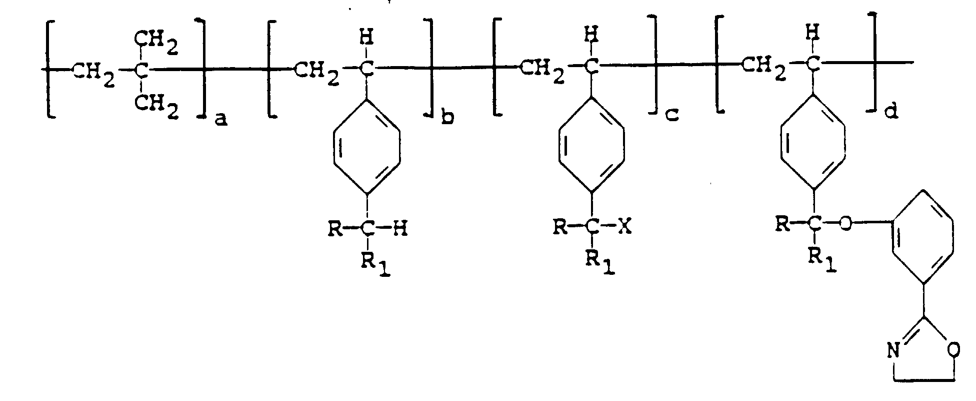 wherein R and R₁ are independently selected from hydrogen, alkyl, primary and secondary alkyl halides and in which the combination of a+b+c+d represents the empirical formula of a substantially random graft copolymer where a ranges from 4 to 70,000; b from 0 to 70,000; c from 0 to 70,000; and d from 1 to 70,000; and in which X represents a halogen.

6. A method of forming an oxazoline functionalized polymer comprising:
contacting a polymer of an isoolefin and a para-alkylstyrene containing benzylic halide with 2-(m-hydroxyphenyl)-2-oxazoline in a solvent and in the presence of t-butyl ammonium hydroxide at a temperature and for a time sufficient to functionalize the polymer with a pendant group containing oxazoline.

7. The method of claim 6 wherein the solvent is selected from chlorobenzene, toluene, and dichloroethane.

8. The method of claim 6 or claim 7, wherein the temperature is in the range 20°C to 150°C.

9. The method of any one of claims 6 to 8, wherein the contacting time is from 1 to 24 hours.

10. The use of the functionalized polymer of any one of claims 1 to 5, or as produced by the method of any one of claims 6 to 9, as a compatibilizer for polymer blends.

## Patentansprüche

1. Funktionalisiertes Polymer aus Isoolefin mit 4 bis 7 Kohlenstoffatomen und para-Alkylstyrol, wobei in dem funktionalisierten Polymer mindestens ein para-Alkylstyrolanteil die Formel 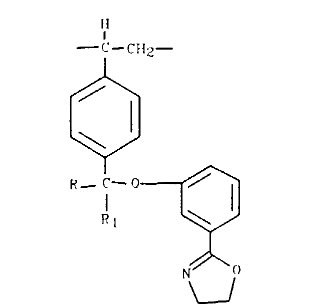 aufweist, in der R und R₁ unabhängig ausgewählt sind aus Wasserstoff, Alkyl und primären und sekundären Alkylhalogeniden.

2. Funktionalisiertes Polymer nach Anspruch 1, bei dem R und R₁ Wasserstoff sind.

3. Polymer nach Anspruch 1 oder Anspruch 2, bei dem das Polymer ein durchschnittliches Molekulargewicht (Zahlenmittel) von 25 000 bis 10⁶ hat.

4. Polymer nach einem der vorhergehenden Ansprüche, bei dem das Isoolefin 4 Kohlenstoffatome aufweist.

5. Funktionalisiertes Polymer mit der Formel 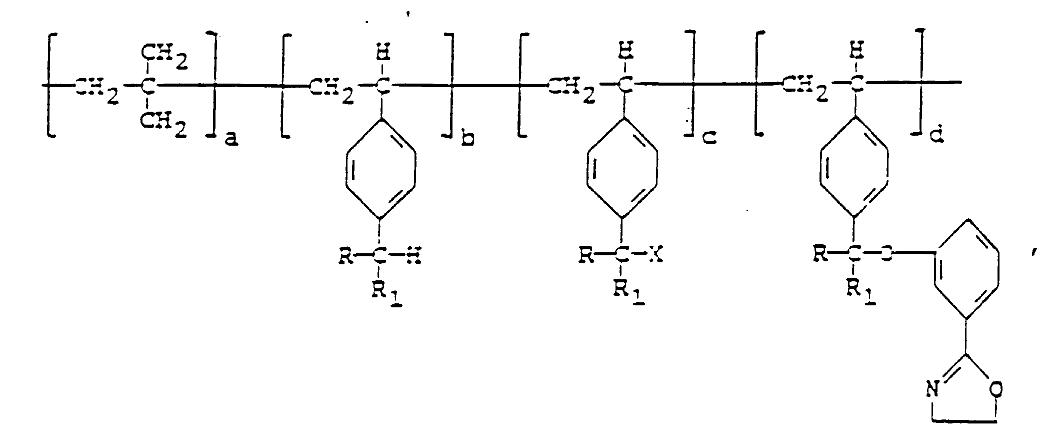 in der R und R₁ unabhängig ausgewählt sind aus Wasserstoff, Alkyl, primären und sekundären Alkylhalogeniden und in der die Kombination aus a+b+c+d die empirische Formel eines im wesentlichen statistischen Pfropfcopolymers wiedergibt, wobei a im Bereich von 4 bis 70 000, b im Bereich von 0 bis 70 000, c im Bereich von 0 bis 70 000 und d im Bereich von 1 bis 70 000 liegt und wobei X ein Halogen bedeutet.

6. Verfahren zur Herstellung von oxazolinfunktionalisiertem Polymer, bei dem
ein Polymer aus Isoolefin und para-Alkylstyrol, das benzylisches Halogenid enthält, mit 2-(m-Hydroxyphenyl)-2-oxazolin in einem Lösungsmittel und in Gegenwart von tert.-Butylammoniumhydroxid bei einer Temperatur und für eine Zeitdauer kontaktiert wird, die ausreichen, um das Polymer mit einer oxazolinhaltigen Seitengruppe zu funktionalisieren.

7. Verfahren nach Anspruch 6, bei dem das Lösungsmittel ausgewählt ist aus Chlorbenzol, Toluol und Dichlorethan.

8. Verfahren nach Anspruch 6 oder Anspruch 7, bei dem die Temperatur im Bereich von 20°C bis 150°C liegt.

9. Verfahren nach einem der Ansprüche 6 bis 8, bei dem die Kontaktzeit 1 bis 24 Stunden beträgt.

10. Verwendung des funktionalisierten Polymers gemäß einem der Ansprüche 1 bis 5 oder hergestellt nach dem Verfahren gemäß einem der Ansprüche 6 bis 9 als Verträglichmacher für Polymerblends.

## Revendications

1. Polymère fonctionnalisé d'une isooléfine ayant 4 à 7 atomes de carbone et d'un para-alkylstyrène, polymère fonctionnalisé dans lequel au moins un radical para-alkylstyrène a pour formule : 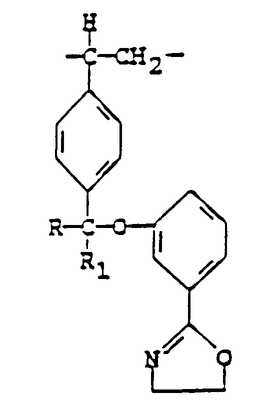 dans laquelle R et R₁ sont indépendamment sélectionnés parmi l'hydrogène, les groupes alkyle et halogénures d'alkyle primaires et secondaires.

2. Polymère fonctionnalisé selon la revendication 1, dans lequel R et R₁ sont de l'hydrogène.

3. Polymère selon la revendication 1 ou 2, dans lequel le polymère a un poids moléculaire moyen en nombre de 25.000 à 10⁶.

4. Polymère selon l'une quelconque des revendications précédentes, dans lequel l'isooléfine a 4 atomes de carbone.

5. Polymère fonctionnalisé représenté par la formule : 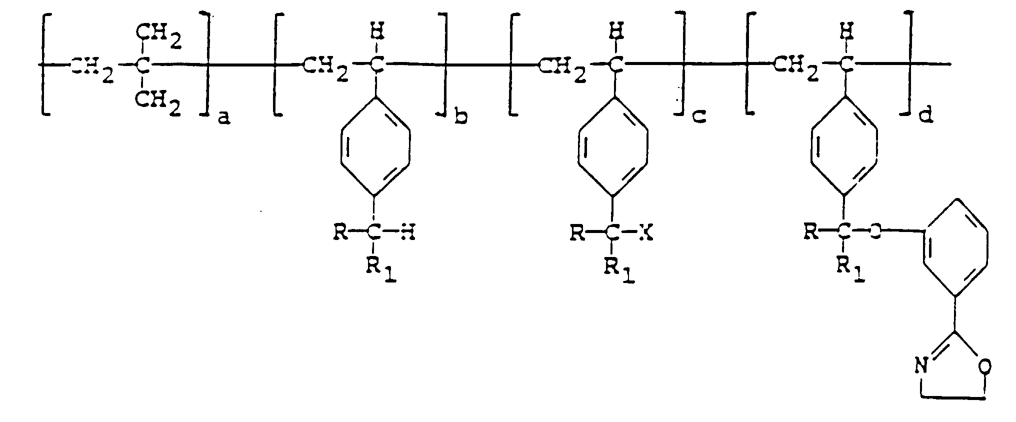 dans laquelle R et R₁ sont indépendamment sélectionnés parmi l'hydrogène, un groupe alkyle, des groupes halogénure d'alkyle primaires et secondaires et dans laquelle la somme (a + b + c + d) représente la formule empirique d'un copolymère greffé essentiellement aléatoire dans laquelle a se situe dans une plage de 4 à 70.000, b dans une plage de 0 à 70.000, c dans une plage de 0 à 70.000 et d dans une plage de 1 à 70.000, et dans laquelle X représente un halogène.

6. Procédé de formation d'un polymère fonctionnalisé d'oxazoline comprenant :
la mise en contact d'un polymère d'une isooléfine et d'un para-alkylstyrène contenant un halogénure de benzyle avec de la 2-(m-hydroxyphényl)-2-oxazoline dans un solvant et en présence d'hydroxyde de t-butylammonium à une température et pendant une période suffisantes pour fonctionnaliser le polymère par un groupe pendant contenant de l'oxazoline.

7. Procédé selon la revendication 6, dans lequel le solvant est sélectionné parmi le chlorobenzène, le toluène et le dichloréthane.

8. Procédé selon la revendication 6 ou 7, dans lequel la température se situe dans une plage de 20 à 150°C.

9. Procédé selon l'une quelconque des revendications 6 à 8, dans lequel la durée de contact est de 1 à 24 heures.

10. Utilisation du polymère fonctionnalisé selon l'une quelconque des revendications 1 à 5 ou tel que produit selon le procédé de l'une quelconque des revendications 6 à 9, comme compatibilisant pour des mélanges de polymères.
